# EUROPÄISCHE PATENTANMELDUNG

(11) **EP 1 120 513 A2**
(43) Veröffentlichungstag der Anmeldung: **01.08.2001**
(21) Anmeldenummer: 01100535.2
(22) Anmeldetag: 10.01.2001
(51) Int. Cl.: E04F 13/08, F16B 5/02, F16B 37/00

(54) **Justierelement zur Befestigung einer Fassadenplatte**

(30) Priorität: 27.01.2000 DE 10003311
(71) Anmelder: fischerwerke Artur Fischer GmbH & Co. KG, 72178 Waldachtal (DE)
(72) Erfinder: Bühl, Rolf, 72280 Dornstetten (DE)

(57) **Zusammenfassung**

Die Erfindung betrifft ein Justierelement (10) zur Befestigung einer Fassadenplatte. Die Erfindung schlägt vor, das Justierelement (10) aus einem Sechskantmaterial mit einer Nut (14), deren Grund (16) ebenfalls die Form eines Sechskants aufweist, und mit einem Gewindeloch (18) als Befestigungsmittel (18) für die Fassadenplatte auszubilden, wobei das Gewindeloch (18) exzentrisch zum Grund (16) der Nut (14) angeordnet ist. Mit der Nut (14) lässt sich das Befestigungselement (10) beispielsweise an einer Lasche einer Tragkonstruktion einhängen und im Gewindeloch (18) lässt sich mittels eines Hinterschnittankers eine Fassadenplatte anbringen. Durch Verdrehen des Justierelements (10) lässt sich die Fassadenplatte in der Höhe verstellen.

## Beschreibung

Die Erfindung betrifft ein Justierelement zur Befestigung einer Fassadenplatte beispielsweise an einer Tragkonstruktion an einer Wand. Anstelle einer Fassadenplatte lässt sich beispielsweise auch eine Glasscheibe oder ein anderes Bauelement mit dem Justierelement an einer Wand oder einem sonstigen Tragelement befestigen.

Zur Befestigung von Fassadenplatten ist es bekannt, Hinterschnittanker in Hinterschnitt-Bohrlöchern, die in einer Rückseite der Fassadenplatte angebracht sind, zu verankern. Mit dem Hinterschnittanker lässt sich die Fassadenplatte an einer Wand oder einer an der Wand angebrachten Tragkonstruktion beispielsweise aus vertikal und/oder horizontal angeordneten Profilschienen befestigen. Dabei tritt das Problem auf, dass Justiermöglichkeiten vorgesehen werden sollten, um Bohr- und Montageungenauigkeiten ausgleichen und um die Fassadenplatte ausrichten zu können. Der Erfindung liegt daher die Aufgabe zugrunde, ein Justierelement zur Befestigung einer Fassadenplatte vorzuschlagen.

Diese Aufgabe wird erfindungsgemäß durch die Merkmale des Anspruchs 1 gelöst. Das erfindungsgemäße Justierelement weist eine umlaufende Nut auf, mit der es zur Befestigung in die Tragkonstruktion einhängbar ist. Das Einhängen erfolgt beispielsweise an einer nach oben abstehenden Rippe einer horizontal angeordneten Profilschiene der Tragkonstruktion, an einer Lasche, die quer an einer vertikal angeordneten Profilschiene der Tragkonstruktion befestigt ist oder durch Einhängen des Justierelements mit seiner umlaufenden Nut in ein Loch, welches in einer Profilschiene der Tragkonstruktion angebracht ist. Das Loch kann eine Schlüssellochform aufweisen. Das erfindungsgemäße Justierelement weist ein Befestigungsmittel zum Anbringen der Fassadenplatte auf, wobei das Befestigungsmittel exzentrisch zu einem Grund der Nut am Justierelement angeordnet ist. Durch die exzentrische Anordnung des Befestigungsmittels zum Grund der Nut lässt sich durch Drehen des Justierelements eine Höhe des Befestigungsmittels über der Stelle, an der das Justierelement mit seiner Nut in die Tragkonstruktion eingehängt ist, einstellen. Auf diese Weise ist eine Höhenjustage möglich. Außer dem Vorteil der Justier- und Toleranzausgleichsmöglichkeit hat das erfindungsgemäße Justierelement den Vorteil, dass es einfach und preisgünstig herstellbar ist und dass es eine einfache Montage aufweist. Weiterer Vorteil des erfindungsgemäßen Justierelements ist dessen geringer Bauraumbedarf und dessen geringe Dicke oder Tiefe senkrecht zur Fassadenplatte. Letzteres hat den Vorteil, dass sich die Fassadenplatte mit geringem Abstand von der Tragkonstruktion an dieser anbringen lässt, wodurch Quer- und Hebelkräfte aufgrund des Gewichts der Fassadenplatte auf die Befestigungselemente der Fassadenplatte, beispielsweise die in der Fassadenplatte verankerten Hinterschnittanker, klein sind.

Bei einer Ausgestaltung der Erfindung ist das Befestigungselement ein Loch, insbesondere ein Gewindeloch. Dies ermöglicht eine einfache und preisgünstige Befestigungsmöglichkeit des Justierelements an der Fassadenplatte beispielsweise durch einfaches Aufsetzen auf einen in der Fassadenplatte verankerten Hinterschnittanker.

In bevorzugter Ausgestaltung der Erfindung weist der Grund der Nut die Form eines Mehrkants auf. Dies hat den Vorteil, dass sich das Justierelement nicht aufgrund der Gewichtskraft der Fassadenplatte verdreht, wenn das exzentrisch zum Grund der Nut angeordnete Befestigungsmittel sich in einer zur Seite gedrehten Stellung befindet.

Zum einfachen Justieren der Fassadenplatte durch Drehen des Justierelements weist das Justierelement bei einer Ausgestaltung der Erfindung einen Werkzeugsitz zum Ansetzen eines Drehwerkzeugs, beispielsweise eines Gabelschlüssels auf. Der Werkzeugsitz ist vorzugsweise als Mehrkant ausgebildet und außerhalb der Nut des Justierelements angeordnet. Zur Ausbildung des Werkzeugsitzes als Mehrkant kann das Justierelement bei einer Ausgestaltung der Erfindung insgesamt die Form eines Mehrkants aufweisen. Das Justierelement lässt sich dadurch in einfacher Weise aus einem Mehrkantstab herstellen, von dem das Justierelement abgetrennt und die Nut und das Befestigungsmittel angebracht werden.

Die Erfindung wird nachfolgend anhand eines in der Zeichnung dargestellten Ausführungsbeispiels näher erläutert. Es zeigen:
- Figur 1: einen Querschnitt eines erfindungsgemäßen Justierelements gemäß Linie 1-1 in Figur 2;
- Figur 2: einen Achsschnitt des Justierelements aus Figur 1 gemäß Linie II-II in Figur 1;
- Figur 3: eine perspektivische Darstellung des Justierelements aus Figur 1; und
- Figur 4: ein Anwendungsbeispiel des Justierelements aus Figur 1 in Seitenansicht.

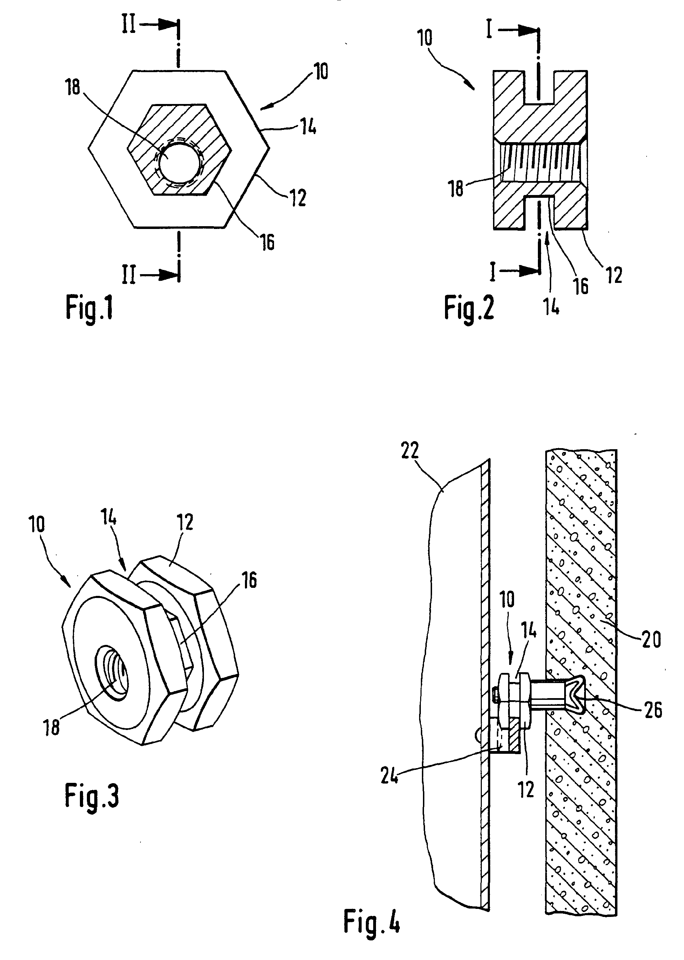

Das in Figuren 1 bis 3 gezeigte, erfindungsgemäße Justierelement 10 ist im dargestellten und beschriebenen Ausführungsbeispiel aus Aluminium hergestellt, es ist von einem Sechskant-Aluminiumstab abgetrennt. Das Justierelement 10 weist einen sechskantförmigen Umfang auf, der einen Werkzeugsitz 12 zum Ansetzen eines nicht dargestellten Gabelschlüssels bildet. Das Justierelement 10 ist mit einer umlaufenden Nut 14 versehen, deren Grund 16 ebenfalls die Form eines Sechskants aufweist. Der sechskantförmige Grund 16 der Nut 14 ist konzentrisch zum ebenfalls sechskantförmigen Werkzeugsitz 12 angeordnet, der den Umfang des Justierelements 10 bildet. Der Grund 16 der Nut 14 kann grundsätzlich auch ein vom Sechskant abweichender Mehrkant sein. Prinzipiell wenn auch weniger geeignet ist auch ein kreisrunder Grund 16 der Nut 14 möglich.

Im Justierelement 10 ist ein Gewindeloch 18 angebracht, das ein Befestigungsmittel 18 bildet. Das Gewindeloch 18 ist achsparallel allerdings exzentrisch zu den vom Grund 16 der Nut 14 und dem Werkzeugsitz 12 gebildeten Sechskanten im Justierelement 10 angebracht.

Die Verwendung des Justierelements 10 ist in Figur 4 dargestellt. Das Justierelement 10 ist zur Befestigung einer Fassadenplatte 20 an einem nicht dargestellten Mauerwerk vorgesehen. An dem Mauerwerk ist eine Tragkonstruktion mit beispielsweise einem vertikal verlaufenden Profilträger 22, der mit dem Mauerwerk beispielsweise verschraubt ist, angebracht. Quer am Profilträger 22 ist eine bügelförmige Lasche 24 beispielsweise durch Nieten angebracht. In die Lasche 24 ist das Justierelement 10 mit seiner Nut 14 eingehängt.

Zur Befestigung der Fassadenplatte 20 am Justierelement 10 ist in einer Rückseite der Fassadenplatte 20 ein Hinterschnitt-Bohrloch angebracht, in dem ein an sich bekannter Hinterschnittanker 26 verankert ist. Auf ein Gewinde des Hinterschnittankers 26 ist das Justierelement 10 lose mit seinem das Befestigungsmittel 18 bildenden Gewindeloch 18 aufgeschraubt. Da das Gewindeloch 18 exzentrisch zum Sechskant des Grundes 16 der Nut 14 des Justierelements 10 angeordnet ist, lässt sich durch Drehen des Justierelements 10 eine Höhe des Hinterschnittankers 26 über der Lasche 24 einstellen. Dadurch ist eine Justiermöglichkeit der Fassadenplatte 20 in der Höhe gegeben. In Querrichtung ist das Justierelement 10 auf der Lasche 24 verschieblich, so dass in Querrichtung keine Justiermöglichkeit erforderlich ist. Da das Justierelement 10 mit dem sechskantförmigen Grund 16 seiner Nut 14 auf der Lasche 24 aufsitzt, ist es drehfest auf der Lasche 24 gehalten und ein selbsttätiges Verdrehen aufgrund des Gewichts der Fassadenplatte 20 nicht zu befürchten, auch wenn das Befestigungsmittel 18 sich in einer zur Seite gedrehten Stellung befindet. Das Verdrehen des Justierelements 10 kann an dessen den Werkzeugsitz 12 bildendem Umfang mittels eines nicht dargestellten Gabelschlüssels von der Seite, von oben oder von unten erfolgen.

## Patentansprüche

1. Justierelement zur Befestigung einer Fassadenplatte, **dadurch gekennzeichnet**, dass das Justierelement (10) eine umlaufende Nut (14), mit der das Justierelement (10) in eine Tragkonstruktion (22, 24) einhängbar ist, und ein exzentrisch zu einem Grund (16) der Nut (14) angeordnetes Befestigungsmittel (18), an dem die Fassadenplatte (20) anbringbar ist, aufweist.

2. Justierelement nach Anspruch 1, **dadurch gekennzeichnet**, dass das Befestigungsmittel (18) ein Loch (18) aufweist.

3. Justierelement nach Anspruch 2, **dadurch gekennzeichnet**, dass das Befestigungsmittel (18) ein Gewindeloch (18) aufweist.

4. Justierelement nach Anspruch 1, **dadurch gekennzeichnet**, dass der Grund (16) der Nut (14) die Form eines Mehrkants aufweist.

5. Justierelement nach Anspruch 1, **dadurch gekennzeichnet**, dass das Justierelement (10) einen Werkzeugsitz (12) zum Ansetzen eines Drehwerkzeugs aufweist.

6. Justierelement nach Anspruch 5, **dadurch gekennzeichnet**, dass das Justierelement (10) einen Mehrkant als Werkzeugsitz (12) außerhalb der Nut (14) aufweist.

7. Justierelement nach Anspruch 6, **dadurch gekennzeichnet**, dass das Justierelement (10) die Form eines Mehrkants aufweist.
